Europäisches Patentamt

European Patent Office

Office européen des brevets

(19)

(11) Publication number: **0 424 591 A1**

## EUROPEAN PATENT APPLICATION

(21) Application number: **89810795.8**

(22) Date of filing: **23.10.89**

(51) Int. Cl.5: **B65G 21/14, E04G 21/04**

(43) Date of publication of application:
**02.05.91 Bulletin 91/18**

(84) Designated Contracting States:
**AT BE DE ES FR GB GR IT LU NL SE**

(71) Applicant: **FERRIERE BELLOLI**

**CH-6537 Grono(CH)**

(72) Inventor: **Belloli, Emilio**

**CH-6557 Cama (GR)(CH)**

(74) Representative: **Pozzoli, Giuliano**
**e/o ENGIMPEX S.A. Industrial Property**
**Services Dept. P.O. Box 12**
**CH-6924 Lugano-Sorengo(CH)**

(54) Quick telescopic, extensible, movable belt conveyor with three rotational degrees of freedom for solid or viscoplastic materials, particularly for use in cement mixer or truck mixer.

(57) The belt conveyor is jointed at least in three sections (1, 2, 3). The base section (1) is turning around horizontal as well as vertical axis, so that the end of the belt fully covers a determined area of a family of cartesian vertical planes.

The intermediate section (2) is made by two beams (2, 2') entering telescopic one (2') into the other (2) by means of a hydraulic cylinder (4) in order to allow the telescopic extension of the head section (3).

The useable operating length of the belt results variable thanks to its S-squashed fold between two rollers (8, 8') connected respectively to the fixed (2) and moveable (2') beam. Their approaching or moving away because of the telescopic extension produces the variation of said length. This always occurs without appreciable loss of the belt tension.

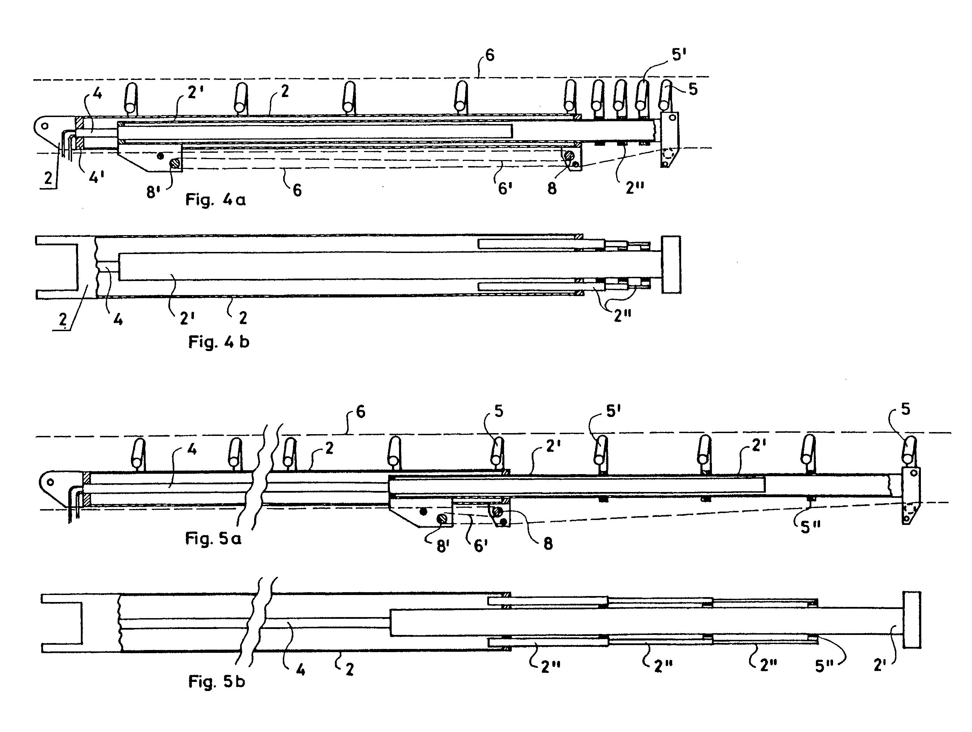

The drawbacks of range, accessibility and stiffness of the belts of the known technique are in this way avoided, obtaining direct transports of material (even not necessarily solid) at high speed even on very steep slopes as well as in hardly accesible places with limited overall dimensions of the belt itself (figures 4a, 4b, 5a and 5b).

Fig. 5a

## QUICK TELESCOPIC, EXTENSIBLE, MOVABLE BELT CONVEYOR WITH THREE ROTATIONAL DEGREES OF FREEDOM FOR SOLID OR VISCOPLASTIC MATERIALS, PARTICULARLY FOR USE IN CEMENT MIXER OR TRUCK MIXER.

The present invention refers to a telescopic, movable belt conveyor for materials, with high capacity of adaptation to the different operating conditions, noticeable capacity to transport the material where it is needed, making possible the direct transportation of the material even to or from zones otherwise of difficult access.

Furthermore the high rotational speed of the belt allows very quick and steep liftings of non necessarily solid materials too.

It is particularly suitable for installation on cement mixer or truck mixer.

Belt conveyors, even for installation on mobile means, are known.

To solve the problem of their transportability or their installation on mobile means, belt conveyors were made by two or more sections folding one on the other. However the transportability involves a limitation of the operating length of the belt and then of its use and effectiveness.

Furthermore jointed belts beyond a certain length or with too many joints show problems of belt tension, tendency of the belt to go out of its dragging slides, limitation of the operating height and structural limits.

The aim of the present invention is to cure the above mentioned drawbacks introducing a jointed telescopic belt conveyor for materials, particularly for cement mixer or truck mixer, with high rotational speed of the belt which can change the useable operating lengths in synchrony with the telescopic extension, at the same time keeping itself always in tension thanks to its S-shaped fold between two supports fixed respectively to the fixed and movable part of the telescopic extensible section.

More precisely the present invention refers to a belt conveyor for materials, characterized by the fact that a flexible belt slides on rollers fixed at least on three sections of supporting beam, mutually jointed for the adaptation to the operating position or for their folding at rest, being at least the head one telescopic extensible, being the useable operating length of the belt variable according to the operational requirements by means of an S-shaped fold of the belt on two supporting rollers whose distance is made variable with the distance of the support and return roller of the belt of the said head section, according to the telescopic extension and against the retraction/extension movement.

In a preferred form of execution of the invention the base section is hinged on a pivot with horizontal axis to allow it to rotate on the vertical plane and then to change its slope on said plane in positive or negative with reference to the horizontal position.

Similarly the telescopic extension of the head section occurs preferably by means of an only hydraulic cylinder connected to a beam sliding into the intermediate section and carrying and driving also the sliding telescopic supports of the supporting rollers of the belt, while the adjustment of the length of the belt and its keeping in permanent tension, indipendently from the required operating length, is allowed by the S-shaped fold of the said belt through two supporting rollers fixed respectively on the fixed and movable part of the intermediate section connected to the head section, in order to allow the telescopic extension of said belt, which is made by an only continuous flexible and elastic stripe closed on itself, resulting its adaptation to the operational requirements from the synchrony with the telescopic extension without discontinuity or losses of tension.

The belt conveyor subject of the invention finds peculiar use in the quick and steep transportation, not only of solid materials, but also of non-newtonian fluids, namely those where the viscosity is function of the state of motion, such as cement mixture, mortars, claies, muds, pasty materials and so on.

We describe in detail in the following a preferred form of execution of the subject of the invention, with reference to the fugures of the attached drawings, without taking anything out of the generality of the invention itself.

- The figure 1 shows the oscillation device on the horizontal plane of the base section of the belt, made by an only hydraulic cylinder.
- The figure 2 shows the positive and negative oscillation range in vertical, with and without telescopic extension, with indication of the extension and rotation radiuses of the different sections, in a particular form of execution for truck mixer.
- The figure 3 shows the range in horizontal rotation, in particular in the case of a truck mixer.
- The figure 4a and 4b show respectively a vertical and horizontal section of the telescopic section made by two hollow beams, entering one into the other, drived by a hydraulic cylinder, with telescopic supports on the rollers carrying the belt, in the retracted position.
- The figures 5a and 5b show said sections of the telescopic section in extended position.

- The figure 6 shows the belt conveyor mounted on the chassis of a truck, in the observance of the allowed overall dimensions, in running condition.

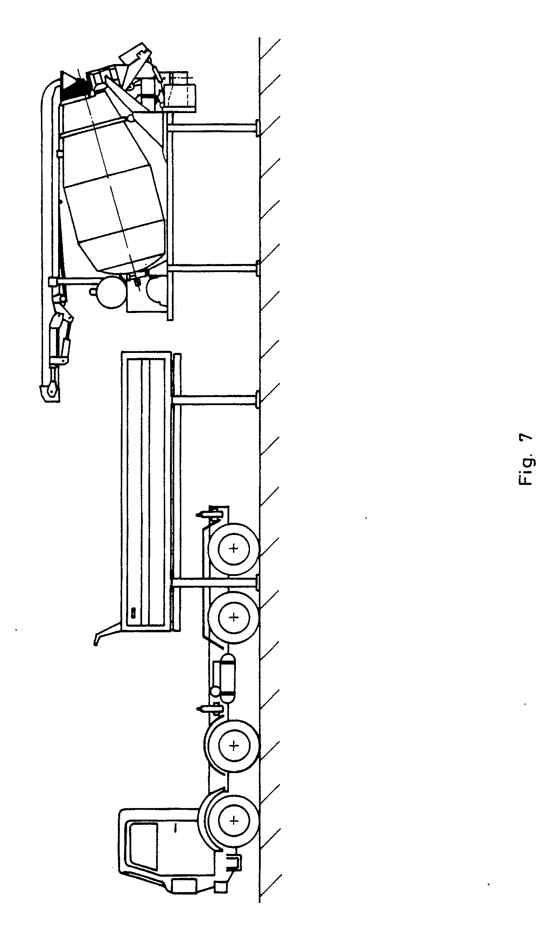

- The figure 7 shows the truck adaptable to the cement mixer, body or container on which the belt conveyor is installed.

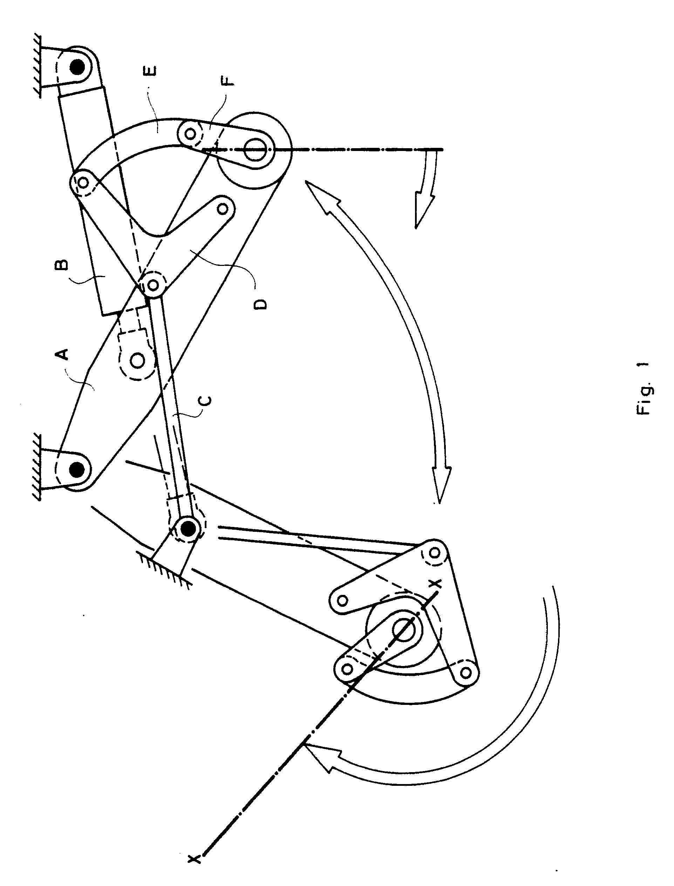

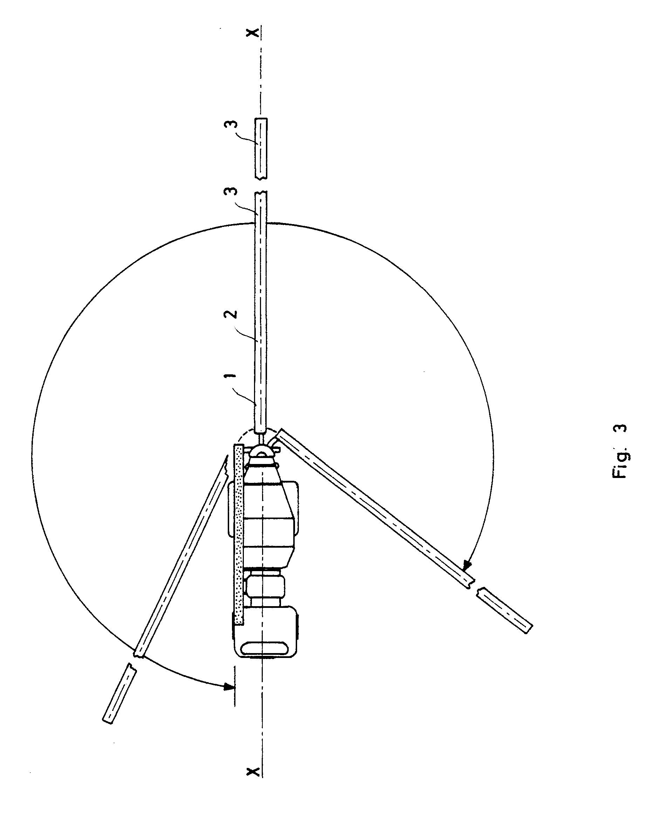

Peculiar characteristic of the belt conveyor is its capability of horizontal oscillation around the axis of the turntable mounted on the chassis of the transporting vehicle, which reaches at least 310° with reference to the longitudinal axis of said vehicle (figures 1 and 3).

We describe the single-cylinder oscillating configuration (figure 1).

- Aim

In the transfer configuration (during the transportation) the belt must find itself in longitudinal position with reference to the ride direction of the vehicle.

In order to allow the use, it must be able to change its slope with reference to the longitudinal axis XX of the vehicle and allow an operating range as wide as possible by means of rotation around an axis perpendicular to XX.

- Design

The oscillation of the projecting arm of the belt occurs by means of a single cylinder.

Thanks to the oscillation geometry of the peculiarly designed lever system (figure 1), the axis of the belt is automatically and forcedly turned during the movement of the oscillating arm. In this way the belt can continuously cover the whole operating field, respectively the operating range, with a single cylinder (figure 3).

- Operation

The oscillating arm A is driven by the cylinder B. At every change of position, the push rod C makes the lever D turning, which in turn makes the oscillating lever F turning by means of the push rod E. Then to every change of position of the oscillating arm A, the axis of the belt is forcedly turned and precisely in both direction of rotation (figure 1).

We move now to the description of the telescopic belt. The belt articulated in three sections (1, 2, 3) shows high capacity of adaptation to the specific operating situation, succeeding in covering all the points of a cartesian diagram plotted on the vertical plane. This because:

1) the belt is jointed on the said three beam sections;
2) the last section (3) has a telescopic movement by means of the telescopic beam (2′) included in the section (2).

The telescopic element includes two beams (2, 2′) sliding one in the other, being the internal one (2′) drived by a hydraulic cylinder (4).

The rollers (8, 8′) are fixed respectively on the two beams; the flexible and elastic belt describes an S-squashed curve on the rollers, so that the part of belt exceeding the operating range (6′) is absorbed in retracted position (the two rollers increase their respective distance because of the sliding of the two beams (2, 2′) one into the other) and so that the whole length is available in the case of telescopic extension (the two rollers (8, 8′) come one near the other because of the coming out of the beam (2′)) (figure 5a).

- Principles

The peculiarly designed telescopic element fulfils two important requirements for the use of the belt conveyor.

- Requirement 1

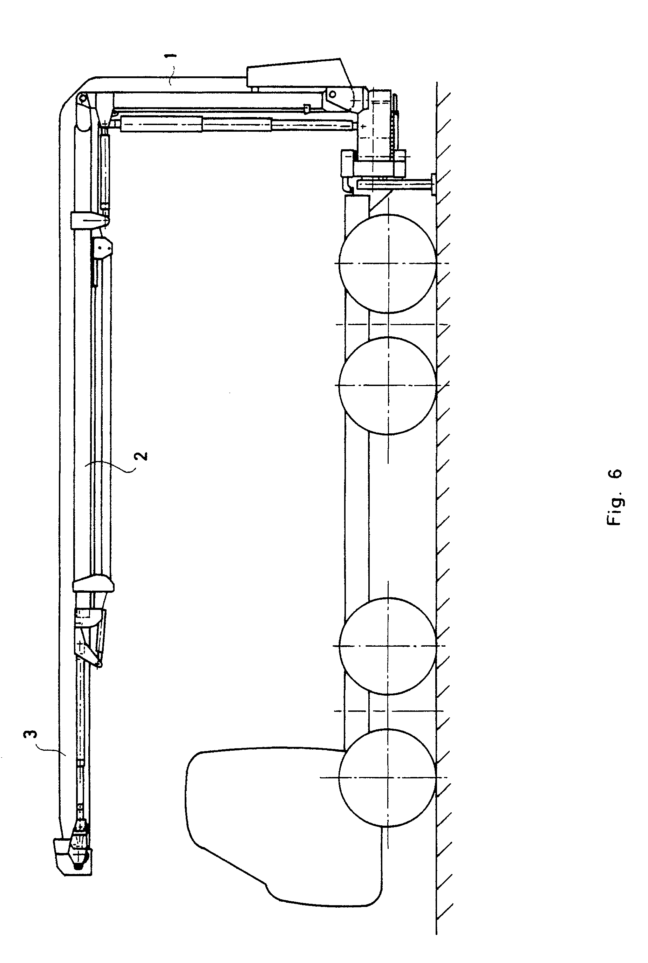

The law provisions must be observed in the installation on the vehicle; the belt conveyor must not protrude longitudinally from the vehicle to allow an unrestricted use on the roads (figure 6).

- Requirement 2

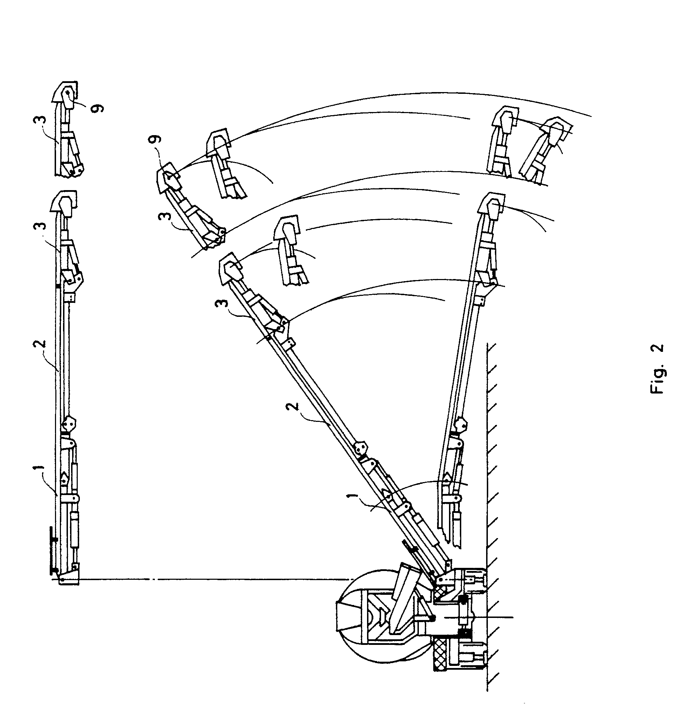

The limitation of the belt dimensions coming from the requirement 1 and the relevant lengths and rotation points in the operating position must have the effect of extension, for the sake to obtain the most large operating and distribution range (figure 2). Height at least of 8 m and horizontal extension at least of 10 m are reached without telescopic extension as well as respectively 8 m and 13 m with telescopic extension.

Configuration of the telescopic element.

- Construction

a) two beams (2, 2′), entering one into the other;
b) special hydraulic cylinder (4);
c) supporting rollers (5, 5′) of the belt (6).

- Beams (2, 2′)

The beams (2, 2') are made by hollow sections and penetrate telescopic one into the other.

- Cylinder (4)

A cylinder (4), with piston rod fixed to the upmost part of the beam (4'), pushes the two beams one against the other, beong the tube of the cylinder (4) fixed to the internal beam (2').

Both feeding chambers of the cylinder are connected to the hydraulic circuit through a peculiarly designed piston and allow in this way a movement of the internal beam with fixed hydraulic ducts.

- Supporting rollers

The belt is supported automatically by the supporting rollers (5') drived by the beam. The stretch run along by the supporting rollers (5') depends on the stretch of the internal beam and is drived by sliding supports or conveying cams (5'') mounted on the beam through the telescopic rods (2'') of retraction/extension between the same supporting rollers. This layout of the rollers allows to keep the distances between the rollers or supports of the belt constant during the extension/retraction. Obliquely positioned rollers are used for a better centering of the belt (6).

- Belt tightener

Two belt slipping rollers (8, 8') are fixed respectively to the internal (2') and to the external (2) beam of the intermediate section (2) drived by the hydraulic cylinder (4), in order that the belt (6) runs along an S-shaped route overlapping itself. The approaching or moving away of said supporting rollers of the belt, because of the telescopic extension of the beam (2') produces the variation (respectively extension or retraction) of the useable length of the belt (figures 4a, 4b, 5a, 5b).

**Claims**

1) Belt conveyor, characterized by the fact that a flexible belt (6) slides on rollers (5, 5') fixed at least on three sections (1, 2, 3) of supporting beam, mutually jointed for the adaptation to the operating position and for their folding at rest, being at least the head one telescopic extensible (3), being the useable operating length of the belt (6) variable according to the operational requirements by means of an S-shaped fold of the belt on two supporting rollers (8, 8') whose distance is made variable with the distance of the support and return roller (9) of the belt of said beam section (3), according to the telescopic extension and against the retraction/extension mevement (figures 2, 4a, 4b, 5a, 5b).

2) Belt conveyor according to the claim 1, where the base section (1) is hinged on a pivot with horizontal axis to allow it to rotate on the vertical plane and then to change its slope on said plane in positive or negative with reference to the horizontal position.

3) Belt conveyor according to the claim 2, where the positive vertical oscillation is at least + 38° with a telescopic extension at least to a height of 8 m, and the negative one at least - 12° with a telescopic extension at least to a depth of 2 m and a horizontal range of said belt at least of 15 m in both cases figure 2).

4) Belt conveyor according to any one of the claims 1, 2 or 3, where the base section (1) lies on a horizontal turntable to allow its rotation in an arc at least of 310° with reference to the longitudinal axis of the cement mixer or truck mixer on wich it is installed (figure 3).

5) Belt conveyor according to any one of the claims 1 to 4, where the telescopic extension of the head section (3) occurs by means of a single hydraulic cylinder (4) connected to a beam (2') sliding into the intermediate section (2) and carrying and driving also the sliding telescopic supports (2'') of the supporting rollers (5') of the belt (6), while the adjustment of the length of the belt and its keeping in permanent tension, independently from the required operating length, is allowed by the S#shaped fold of the said belt (6') through two supporting rollers (8, 8') fixed respectively to the fixed (2) and movable (2') part of the intermediate section (2), connected to the head section (3), in order to allow the telescopic extension of said belt, which is made by a single continuous flexible and elastic stripe closed on itself, resulting its adaptation to the operational requirements from the synchrony with the telescopic extension, without discontinuity or losses of tension (figures 4a and 5a).

6) Belt conveyor according to the claim 1 or 5, where the rollers (5, 5') supporting the belt are positioned oblique, in order to allow a constant centering of the belt, and said sliding supports are connected to the internal telescopic beam (2') through the telescopic rods (2'') on sliding supports or conveying cams (5'') to maintain the equidistance during their extension/retraction (figures 4a, 4b, 5a, 5b).

7) Use of the belt conveyor according to any one of the claims 1 to 6 for the transportation and the quick and steep lifting of solid materials or non-newtonian fluids.

8) Cement mixer including the belt conveyor according to any one of the claims 1 to 7 (figure 7).

9) Truck whose chassis includes the belt conveyor according to any one of the claims 1 to 7 (figure 6).

Fig. 1

EP 0 424 591 A1

Fig. 2

Fig. 3

EP 0 424 591 A1

Fig. 4a

Fig. 4b

Fig. 5a

Fig. 5b

9

Fig. 6

Fig. 7

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A-2 507 529 (L. ROSSI)<br>* Whole document * | 1,2 | B 65 G 21/14<br>E 04 G 21/04 |
| A | | 3,4,7,8,9 | |
| X | CH-A- 664 342 (A. GAMBA)<br>* Whole document * | 1,2,3,4,5 | |
| A | | 7,8,9 | |
| A | DE-A-3 446 290 (K. SCHLECHT)<br>* Figures 1,2 * | 2,3,4 | |
| A | GB-A-2 110 623 (A. BUSH)<br>* Abstract; fig. * | 6 | |

TECHNICAL FIELDS
SEARCHED (Int. Cl.5)

B 65 G
E 04 G

The present search report has been drawn up for all claims

| Place of search | Date of completion of the search | Examiner |
|---|---|---|
| THE HAGUE | 15-06-1990 | VAN ROLLEGHEM F.M. |